# EUROPÄISCHE PATENTANMELDUNG

(11) **EP 1 076 000 A2**
(43) Veröffentlichungstag der Anmeldung: **14.02.2001**
(21) Anmeldenummer: 00116271.8
(22) Anmeldetag: 09.08.2000
(51) Int. Cl.: B62D 25/20

(54) **Ladeboden für Fahrzeuge**

(30) Priorität: 10.08.1999 DE 19937793
(71) Anmelder: Kögel Fahrzeugwerke Aktiengesellschaft, D-89079 Ulm (DE)
(72) Erfinder: Volz, Siegfried, 89160 Oberdischingen (DE); De Veer, Holger, 89155 Ringingen (DE)
(74) Vertreter: HOFFMANN - EITLE

(57) **Zusammenfassung**

Die Erfindung betrifft einen Ladeboden (10) für Fahrzeuge, der aus mehreren nebeneinanderliegenden Bohlen oder Platten (12) besteht, die zusammen eine Ladefläche (20) bilden. Der erfindungsgemäß Ladeboden ist dadurch gekennzeichnet, dass wenigstens einige der Bohlen oder Platten (12) auf ihrer der Ladefläche (20) gegenüberliegenden Unterseite zumindest eine Ausnehmung (36) aufweisen, die sich über wesentliche Zugbelastungsbereiche der Bohlen bzw. Platten (12) erstreckt. In einer solchen Ausnehmung (36) ist ein Verstärkungselement (34, 40) zumindest mit einem Teilabschnitt formschlüssig eingelegt. Die Verstärkungselemente (34, 40) sind zudem fest mit der zugehörigen Bohle oder Platte (12) verbunden.

## Beschreibung

### Technisches Gebiet

Die Erfindung betrifft einen Ladeboden für Fahrzeuge, der insbesondere bei Fahrzeugen oder Anhängern zum Gütertransport zum Einsatz kommt. Ein solcher Ladeboden umfasst mehrere nebeneinanderliegende Bohlen oder Platten, die zusammen eine Ladefläche bilden.

Ladeböden für Fahrzeuge, insbesondere für Lastfahrzeuge zum Gütertransport, müssen erheblichen Belastungen standhalten. Zum einen entstehen diese Belastungen durch die Fracht, die auf den Ladeboden abgestellt und transportiert wird, zum anderen und in einem erhöhten Maß durch das Befahren des Ladebodens durch Stapler. Die Stapler, die beim Be- und Entladen auf dem Ladeboden operieren, bringen auf den Ladeboden des Gütertransportfahrzeugs in einem relativ begrenzten Bereich eine hohe Belastung auf. In diesen Bereichen, in denen die Gewichtskraft des Staplers mit Ladung wirkt, entsteht auf dem Ladeboden eine Zug-/Druckbelastung. Diese Belastungen verteilen sich in Einbaulage des Ladebodens so, dass dessen Oberseite Druckkräften ausgesetzt ist, und in dessen Unterseite Zugspannungen auftreten.

### Stand der Technik

Ladeböden, die in der Regel aus nicht-abriebfestem Werkstoff, wie Holz, bestehen, müssen diese Belastung aufnehmen, ohne wesentlichen Schaden zu erleiden. Bei Verwendung eines Holzbodens mit einem homogenen Gefüge ist dabei die Gefahr gegeben, dass im Zugbereich eine durch Astlöcher hervorgerufene Kerbwirkung zu einem Versagen des Ladebodens an der jeweiligen Kerbstelle führt. Um dem entgegenzuwirken, sind die Ladeböden daher bislang dick ausgebildet, so dass auch an etwaigen Astlöchern oder ähnlichem kein Versagen auftritt. Derartige Ladeböden aus Holz oder einem anderen nicht abriebfesten Werkstoff stützen sich auf einer Querbalkenlage des Chassis ab und sind als Beplankung oder als Platten ausgebildet. Die Planken sind in der Regel längslaufende Bretter oder Bohlen mit einer formschlüssigen Verbindung untereinander. Diese formschlüssige Verbindung, wie z.B. Nuten und Federn, Stufenfalze oder Verzahnungen, ermöglichen eine Verbindung der Bretter untereinander. Alternativ dazu werden die Planken einfach aneinander gelegt und durch Befestigungselemente an Querträgern gegen Lösen gesichert.

Ein Ladeboden für ein Lastfahrzeug, der aus Nut- und Federbrettern aufgebaut ist, ist aus dem deutschen Gebrauchsmuster DE 296 00 566 U1 bekannt. Der dort beschriebene Laderaumboden weist zusätzlich mehrere metallene, im Querschnitt trogförmige Stützprofile auf, die parallel zueinander verlaufen. In den Stützprofilen sind Tragelemente einlegbar und unter niedrigem Reibungswiderstand verfahrbar. Auf diesen Tragelementen können beladene Paletten aufgesetzt und im Laderaum leicht verschoben werden. Die Beplankung wird dabei geschont. In Querrichtung betrachtet werden jeweils mehrere Planken die direkt nebeneinander liegen, als Gruppe von zwei randseitigen Stützprofilen gehalten. Damit sind auch bei dieser bekannten Ausführungsform eines Ladebodens die Planken trotz einzelner Stützprofile äußerst dick auszubilden, um ein Versagen zu verhindern.

Aus der DE-OS 21 34 961 ist ein Gütertransportfahrzeugladeboden bekannt, der im wesentlichen aus in gleichen Abständen voneinander auf Querträgern des Untergestells befestigten Doppel-T-Profilen und zwischen diesen Profilen eingeschobenen Holzbohlen besteht. Die Holzbohlen liegen auf den Querträgern auf und sind mit ihren Rändern in die seitliche Nuten der Profile eingefügt. Die zwischen die Profile eingeschobenen Holzbohlen bestehen jeweils aus einem homogenen Holzstück. Diese Ladebodenkonstruktion soll eine hohe Weichheit und Nachgiebigkeit auch bei schweren Belastungsbedingungen bewahren, indem Dehnungen des Holzes zugelassen sind. Da auch hier, wie bei dem zuvor genannten deutschen Gebrauchsmuster DE 296 00 566 U1, die Bohlen nur an deren Längsrändern gestützt werden, sind hier die Bohlen weiterhin extrem dick auszubilden, was insgesamt zu einem schweren Ladeboden führt.

In der AT 181202 ist ein Pritschen- bzw. Ladeboden für Nutzfahrzeuge offenbart, der vorzugsweise aus Stahl- oder Leichtmetallblech besteht. Der Boden ist mit einem Belag aus Gummi oder einem ähnlichen elastischen Material versehen. In einer Ausführungsform ist der Pritschenboden aus mehreren neben- oder hintereinander angeordneten Einzelelementen gebildet, die durch eine Nut-Feder-Verbindung stoßseitig zusammengefügt sind. Bei dieser Ausführungsform weist jedes Einzelelement folgenden Schichtaufbau auf. Auf einem Wellblech ist eine elastische Unterschicht aufgeklebt oder aufvulkanisiert. Auf dieser Unterschicht wiederum befindet sich eine verschleißfeste Oberschicht, die lose aufliegt oder aufgeklebt oder aufvulkanisiert ist. Alle Schichten reichen hier über die gesamte Breite der Einzelelemente.

Schließlich ist in der DE 28 55 380 C3 ein aus mehreren einzelnen Bodenplatten zusammengesetzter Omnibusboden gezeigt. Die Bodenplatten weisen offensichtlich ein homogenes Gefüge auf. Zwischen den Bodenplatten ist jeweils ein elastisches Profil eingefügt. Das Profil besteht aus einem im ausgehärteten Zustand elastischen Kleber, der auf Rahmenteile aufgetragen ist, die eine Auflage für die Bodenplatten bilden.

### Darstellung der Erfindung

Der Erfindung liegt das technische Problem zugrunde, einen Ladeboden für Fahrzeuge zu schaffen, der einfach zu montieren ist und trotz hoher Festigkeit gewichtsoptimiert ist.

Diese Aufgabe wird durch einen Ladeboden mit den Merkmalen des Anspruchs 1 gelöst.

Der Erfindung liegt der Gedanke zugrunde, die bisher homogen aufgebauten Bohlen oder Platten des Ladebodens erstmals zum einen inhomogen zu gestalten, zum anderen gezielt hinsichtlich der Biegeeigenschaften zu verstärken, ohne die äußeren Abmessungen einer Bohle oder Platte wesentlich erhöhen zu müssen. Im Gegenteil, durch eine erfindungsgemäße Ausgestaltung der einzelnen Bodenelemente, also der Bohlen oder Platten, ist es sogar möglich, insbesondere die Stärke oder Dicke eines Bodenelementes gegenüber einem vergleichbaren Bodenelement nach dem Stand der Technik zu verringern. Erfindungsgemäß setzt sich also ein Bodenelement entweder aus verschiedenen Materialien oder Materialdichten zusammen, wobei ein Verstärkungselement aus einem anderen Material oder mit anderer Materialdichte als die Bohle oder Platte in einer Ausnehmung wenigstens mit einem Teilabschnitt formschlüssig eingelegt und fest darin angebracht ist. Das Verstärkungselement kann aber auch aus dem gleichen Material wie die Bohle oder Platte bestehen und beispielsweise durch Einpressen und/oder Kleben oder Leimen fest darin verankert werden, so dass nun gezielt eine Bohlen- oder Plattendurchbiegung bei hohen Belastungen begrenzt oder sogar weitgehend verhindert wird, und gleichzeitig die einzelnen Bohlen bzw. Planken gewichtsoptimiert sind, weil sie nun insbesondere weniger dick als bisher ausgebildet werden können. Hierfür ist erstmals an der in Einbaulage der Unterseite der Bohlen oder Platten, also auf der der Ladefläche gegenüberliegenden Seite, über wesentliche Zugbelastungsbereiche der Bohlen bzw. Platten zumindest ein Verstärkungselement fest angebracht. Das Verstärkungselement wird in eine dafür vorgesehene Ausnehmung oder Aussparung in der Bohle oder Platte vorzugsweise mit einem Presssitz eingefügt. Diese Bohlen oder Bretter, die meist auf den Querträgern aufliegen und im Fall der Bohlen in der Regel längs verlegt sind, weisen somit kein homogenes Gefüge mehr auf, sondern umfassen zumindest zwei Einheiten, die beispielsweise aus unterschiedlichen Materialien oder Materialdichten bestehen, die der jeweiligen Funktion und Belastung angepasst sind.

Es ist auch bei Ausbildung des Verstärkungselements und des "Hauptelements" aus demselben Material beispielsweise aufgrund eines Presssitzes, durch den die beiden Elemente zusammengefügt sind, ein Verstärkungseffekt erzielbar. Dieser kann optimiert werden, wenn die Strukturrichtungen der Hauptschicht und der Verstärkung, bei Holz z.B. die Faserrichtung, aufeinander abgestimmt werden. Ein Winkelversatz der Faserrichtungen bzw. Strukturrichtungen kann somit zum Erzielen einer optimalen Verstärkung ausgenützt werden.

Der gezielte Einsatz eines verstärkenden Elements bzw. eines verstärkenden Bereichs auf der Zugseite der Bohlen oder bzw. Platten eines Teils der Bohlen oder Platten bietet den Vorteil, dass die Gesamtdicke der Bohlen oder Platten geringer gehalten werden kann, da die erforderliche Festigkeit, die z.B. zum Befahren des Ladebodens mit Staplern benötigt wird, im Wesentlichen durch das Verstärkungselement auf der in Einbaulage Unterseite der Bohlen oder Platten, also der Zugseite, erzeugt wird. Eine Verstärkung auf der Zugseite ist in der Regel ausreichend, da dort die Hauptbelastung auftritt.

Die erzielbaren Festigkeitswerte einer hier beschriebenen Bohle bzw. Platte können noch gesteigert werden, indem zwischen der Bohle oder Platte und dem Verstärkungselement eine Zugkräfte aufnehmende Lage aus beispielsweise Stoff, einem Gewebe oder einem Gewirke eingelegt wird. So ist hierzu beispielsweise ein Glasfasergewebe oder -gewirke wie auch ein Kohlefasergewebe oder -gewirke geeignet. Selbstverständlich sind auch derartige Gestricke einsetzbar. In diesem Fall kann das Verstärkungselement auch nur eine Schutzfunktion für die Verstärkungslage und

Vorzugsweise ist das Verstärkungselement auf den Querschnittsmittelbereich der Platten oder Bohlen beschränkt, wodurch der gewünschte Verstärkungseffekt bewirkt wird, gleichzeitig aber auch die Gewichtsreduzierung erhöht wird. Es ist aus obengenannten Gründen vorteilhaft, dass das Verstärkungselement als Einlage in die Bohle oder Platte zumindest zum Teil integriert ist.

Die Bohlen oder Platten liegen meist in Längsrichtung auf den Querträgern, die mit dem Chassis verbunden sind, auf und stützen sich darauf ab. Untereinander können die Bohlen oder Platten ebenfalls verbunden sein, meist durch formschlüssige Verbindungen, unter Umständen unter Zuhilfenahme eines Verbindungselements, wie auch sie im Stand der Technik bekannt sind.

Dieser Aufbau ermöglicht eine einfache Montage des Ladebodens und bietet die Möglichkeit, den Boden weitgehend vor der Montage vorzufertigen. Ferner erfüllt ein derart gestalteter Ladeboden für Lastfahrzeuge in Verbindung mit einer geeigneten Wahl für den Werkstoff der Bohlen oder Platten die an ihn gestellten Anforderungen hinsichtlich Elastizität und Nachgiebigkeit aufgrund einer geeigneten Lagerung der Bohlen oder Platten und ihrer Verbindung untereinander. Alternativ dazu ist es ausreichend, die Bohlen oder Platten an Querträgern zu befestigen und auf eine Verbindung untereinander zu verzichten, sie also aneinander anstoßen zu lassen.

Vorteilhafte Ausführungsformen sind durch die übrigen Ansprüche gekennzeichnet.

So ist die Verbindung zwischen den Bohlen oder Platten nach einer bevorzugten Ausführungsform eine formschlüssige Verbindung, wie z.B. eine Nut-Feder-Verbindung, ein Stufenfalz oder eine Verzahnung. Das bietet die Möglichkeit, eine stabile und gleichzeitig elastische Verbindung zu schaffen, wie sie für Ladeböden verlangt wird. In der Regel wird eine einfache formschlüssige Verbindung verwendet, es ist jedoch auch möglich, z.B. mehrere Federn eines Bauteils in entsprechende Nuten eines anderen Bauteils eingreifen zu lassen. Solche formschlüssigen Verbindungen sind einfach und schnell zu montieren. Dies kann durch Zusammenschieben geschehen und ist insbesondere dann einfach, wenn nicht hinterschnittene formschlüssige Verbindungen zur Anwendung kommen.

Vorteilhafterweise sind die Bohlen oder Platten des Ladebodens über Profile verbunden. Werden Profile eingesetzt, um die Verbindung zwischen zwei Bohlen oder Platten herzustellen, wird gleichzeitig eine erhöhte Festigkeit des gesamten Ladebodens erreicht. Dadurch ist es möglich, die Dicke der Bohlen oder Platten weiter zu reduzieren und trotzdem ausreichende Festigkeitseigenschaften zu erzielen. Eine Reduzierung der Dicke führt zu einem reduzierten Gesamtgewicht des Ladebodens und damit zu Kraftstoff- und Kosteneinsparungen im Betrieb. Ferner bietet eine Verringerung der Dicke den Vorteil, dass die gesamte Bauhöhe des Bodens abnimmt und somit das Ladevolumen der Fahrzeuge vergrößert wird.

In diesem Fall, bei Verwendung von Profilen als Verbindung zwischen zwei Bohlen oder Platten, sind die Elemente an den Seitenflanken mit einer zu dem Profil passenden Geometrie versehen. Dabei sind die Bohlen oder Platten vorzugsweise so geformt, dass im Einbauzustand an der Ober- und Unterseite der Elemente jeweils ebene Flächen entstehen.

Beispiele für solche Profile sind Doppel-T-Profile oder T-Profile, wobei die T-Profile zur Erzielung einer möglichst guten Festigkeit so eingebaut werden, dass der Querbereich des T-Profils in Einbaulage mit der Unterseite der Bohlen eine bündige Fläche bildet. Vorzugsweise werden diese Profile aus Aluminium, aus Stahl oder aus Glasfaser verstärktem Kunststoff (GFK) gefertigt. Diese Werkstoffe zeichnen sich durch besonders günstige Festigkeitseigenschaften aus, wobei sie dennoch elastisch genug sind, um die bei dem Ladeboden für Lastfahrzeuge benötigte Federung sicherzustellen. Werden Profile aus Aluminium oder aus GFK verwendet, ist damit zusätzlich ein Vorteil hinsichtlich der Ersparnis von Gewicht gegenüber beispielsweise Stahlprofilen verbunden. Andere geeignete Werkstoffe sind selbstverständlich ebenfalls einsetzbar.

In einer bevorzugten Ausführungsform sind die Bohlen oder Platten des Ladebodens aus Holz, insbesondere Weichholz. Holz bietet als nicht abriebfester Werkstoff den Vorteil, dass auch bei empfindlichem Frachtgut, beispielsweise bei Möbeltransporten, nicht zu befürchten ist, dass eine Beschädigung des Transportguts aufgrund der Härte des Ladebodens auftritt. Ebenso wird durch eine gewisse Elastizität, die durch Holz gewährleistet ist, sichergestellt, dass kleinere Erschütterungen beim Transport gedämpft werden. Durch das Anbringen einer Verstärkung auf der unteren Seite der Bohlen ist die erwähnte Gefahr des Auftretens eines Kerbeffekts aufgrund von Astlöchern im Holz weitgehend eliminiert. Holz ist ferner ein kostengünstiger Werkstoff.

Vorzugsweise sind die Verstärkungen streifenförmig ausgebildet und werden in jeweilige Aussparungen in den Bohlen oder Platten eingefügt. Die Breite der Streifen soll so gewählt werden, dass ein möglichst großer Bereich der Breite der Bohle oder Platte verstärkt ist, oder es können mehrere schmälere Streifen nebeneinander in mehrere entsprechende Aussparungen in den Bohlen oder Platten eingelegt werden. Ebenso ist es möglich, die Verstärkung als einen in Längsrichtung nicht unterbrochenen Streifen über einen Großteil der Länge der Bohle oder Platte auszubilden, oder aber die Bohle oder Platte abschnittsweise zu verstärken. Werden solche kürzeren Streifen verwendet, die sich zudem nicht über die gesamte Breite oder einen wesentlichen Teil der Breite der Bohle oder Platte erstrecken, ist es möglich, die Verstärkungsstreifen versetzt anzuordnen. Bei Streifenabschnitten bietet sich der Vorteil, dass gezielt bestimmte Bereiche eines Ladebodens verstärkt werden können. Dies bietet sich beispielsweise bei Spezialfahrzeugen an, bei denen eine erhöhte Zugbelastung auf die Unterseite der Bohlen nur in bestimmten Bereichen auftritt.

Vorzugsweise weisen die streifenförmigen Verstärkungen an den seitlichen Flanken Schrägen auf, dergestalt, dass die Streifen in Einbaulage eine breitere Unterseite und eine schmälere Oberseite besitzen. Dadurch wird das Einbringen der Verstärkung in die Aussparung erleichtert. Die Aussparungen sind so gestaltet, dass die Verstärkungen in den Aussparungen durch eine Presspassung verbunden sind.

Eine Schräge in entgegengesetzter Richtung, also so, dass ein in Einbaulage an der oberen Seite breiterer Schwalbenschwanz entsteht, ist ebenfalls möglich. Diese Schräge an den seitlichen Flanken ist insofern vorteilhaft, als beim Zusammenfügen der Verbindung zwischen Bohlen und Verstärkung eine selbsthemmende Wirkung zusätzlich zur Hemmung durch den Presssitz auftritt, was insbesondere bei einer Verbindung durch Aufleimen ein permanentes Pressen während des Aushärtvorgangs nicht mehr erforderlich macht. Diese Art der Verstärkung bietet zudem den Vorteil, dass sie entweder in eine einstückige Bohle oder Platte integriert werden kann oder als Verbindungselement einer zwei- oder mehrteiligen Bohle oder Platte dient.

Statt einer streifenförmigen Verstärkung können Profile zum Einsatz kommen. T-Profile oder Hohlprofile bieten sehr gute Festigkeitseigenschaften, so dass durch den Einsatz solcher Profile eine sehr gezielte Verstärkung der Bohlen oder Platten und damit des gesamten Ladebodens möglich ist. Diese Verstärkung wiederum führt zur Reduzierung der Gesamtdicke des Ladebodens, damit zur Gewichtseinsparung und zu vermindertem Kraftstoffverbrauch. Solche Profile sind ferner als Standardbauteile kostengünstig.

Als Werkstoffe für die Profile ebenso wie für die streifenförmigen Verstärkungen kommen beispielsweise Stahl, Aluminium oder glasfaserverstärkter Kunststoff (GFK) infrage. Aluminium, etwa in Form von Aluminium-Strangpressprofilen, und GFK-Profile zeichnen sich zudem vorteilhaft hinsichtlich ihres verhältnismäßig geringen Gewichts aus, gewährleisten aber trotzdem sehr gute Festigkeitseigenschaften. Auch Holz, insbesondere Hartholz, ist ein bevorzugter Werkstoff für die Verstärkungen. Selbst beim Ausbilden der Verstärkung und der Bohle/Platte aus demselben Material, etwa beide Bauteile aus Weichholz, ist ein verstärkender Effekt erzielbar, einerseits durch Einfügen der Verstärkung in die Bohle oder Platte durch einen Presssitz, andererseits durch gezielte Ausrichtung der Hauptfaserrichtungen.

Nach einer vorteilhaften Ausführungsform sind die Verstärkungen und die Bohlen oder Platten über Klebeverbindungen miteinander verbunden. Das Aufleimen der Verstärkungen ist insbesondere günstig, da keine weiteren Kerbstellen, wie sie beispielsweise bei Schraubenverbindungen entstehen, auftreten. Die Klebeverbindung wird durch ein Pressen während des Aushärtevorgangs ausreichend haltbar. In manchen Fällen kann dieses Pressen während des Aushärtevorgangs sogar entfallen, insbesondere dann, wenn streifenförmige Elemente mit schrägen seitlichen Flanken verwendet werden, die eine selbsthemmende Wirkung besitzen. Die Klebeverbindung sichert die Verbindung zwischen Verstärkung und Bohle oder Platte zusätzlich zur reibschlüssigen Verbindung durch den Presssitz.

Vorzugsweise umfasst der Ladeboden zusätzlich eine Verschleißplatte, die auf der Oberseite der Bohlen angebracht ist. Wird eine Verschleißplatte, die üblicherweise aus Sperrholz ist, eingesetzt, so ergibt sich ein dreischichtiger Aufbau des Ladebodens, dergestalt, dass im oberen Bereich an der Druckzone ein festes Material verwendet wird, das zusätzlich die Anforderungen hinsichtlich Elastizität und einer gewissen Weichheit, die das Transportgut vor Beschädigungen schützt, erfüllt. Diese Verschleißplatte im oberen Bereich ist zudem bei Abnutzung oder Beschädigung einfach und kostengünstig zu ersetzen und schützt den eigentlichen Ladeboden vor Beschädigungen. In der Zugzone, dem unteren Bereich des Ladebodens, wird ebenfalls hochfestes Material verwendet, um die Festigkeitsanforderungen, die beispielsweise durch das Befahren des Ladebodens mit Staplern entstehen, zu erfüllen. Zwischen diesen beiden Schichten kann ein verhältnismäßig preisgünstiges Material eingesetzt werden, das im wesentlichen als Trägermaterial für beide Schichten dient, jedoch selbst nur unwesentliche Anteile der Belastung aufnimmt und somit keine erhöhten Anforderungen an Festigkeit oder ähnlichem erfüllen muss. Insgesamt führt dieser Aufbau eines Ladebodens zu leichten, dünnen Ladeböden für Lastfahrzeuge, die es ermöglichen, dass zum einen aufgrund der geringen Bauhöhe des Bodens das Ladevolumen der Fahrzeuge vergrößert wird, und andererseits aufgrund des geringen Gewichts des Bodens, das daraus resultiert, dass hochfestes Material im wesentlichen nur an den hochbeanspruchten Stellen eingesetzt wird, zu einer Kosteneinsparung führt.

### Kurze Beschreibung der Zeichnungen

Nachfolgend wird die Erfindung rein beispielhaft anhand der beigefügten Figuren beschrieben, in denen
- Fig. 1: einen Querschnitt durch einen Ladeboden eines Lastfahrzeugs zeigt;
- Fig. 2: einen Ausschnitt aus Fig. 1 zeigt, in dem eine Verbindung zwischen zwei Bohlen über ein T-Profil veranschaulicht wird;
- Fig. 3: einen Ausschnitt aus dem Querschnitt von Fig. 1 zeigt, in dem eine Verbindung zwischen zwei Bohlen über ein Doppel-T-Profii veranschaulicht wird;
- Fig. 4: einen Querschnitt durch eine verstärkte Bohle in einer ersten Ausführungsform zeigt;
- Fig. 5: einen Querschnitt durch eine Bohle in einer weiteren Ausführungsform zeigt;
- Fig. 6: einen Querschnitt durch eine Bohle in einer weiteren Ausführungsform zeigt; und
- Fig. 7: einen Querschnitt durch eine Bohle in einer weiteren Ausführungsform zeigt.

### Wege zur Ausführung der Erfindung

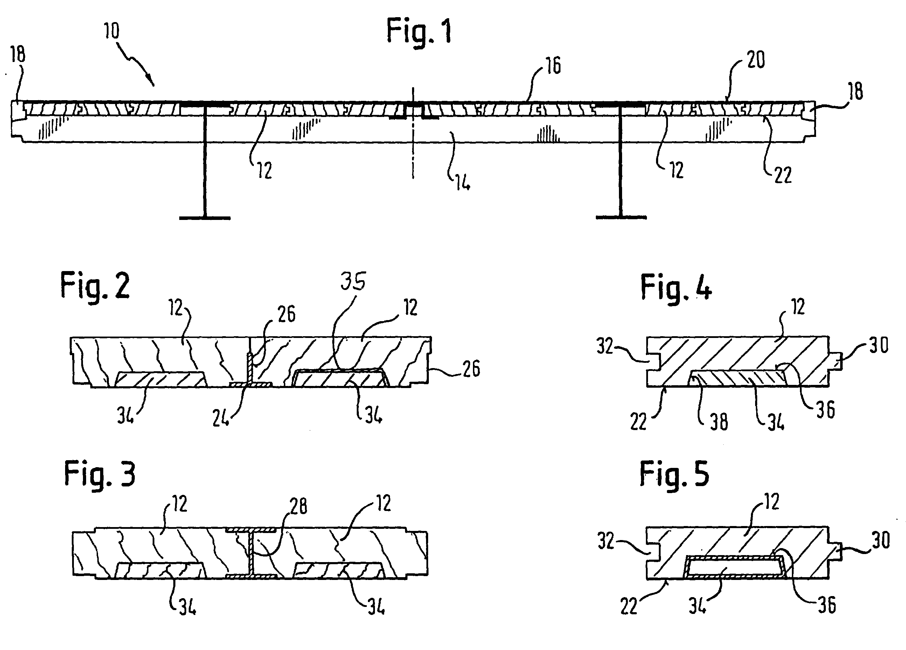

In Fig. 1 ist ein Querschnitt durch einen Ladeboden 10 eines Lastfahrzeugs gezeigt. Die Bohlen 12 liegen auf Querträgern 14 auf, wobei in Längsrichtung des Fahrzeugs gesehen mehrere solcher Querträger 14 hintereinander angeordnet sind. Dabei wird der Boden mit den Querträgern üblicherweise verschraubt, wobei beispielsweise selbstschneidende Bodenschrauben zum Einsatz kommen. Auf der Oberseite der Bohlen ist eine durchgängige bzw. über mehrere Bohlen reichende Verschleißplatte 16 befestigt. Die Verschleißplatte 16 ist in der Regel ebenfalls mit den anderen Bauteilen verschraubt. An der Seite der Querträger 14 sind ferner formgebende Profile 18 angebracht, dergestalt, dass sie zusammen mit den Querträgern eine Aufnahmenut für die Bohlen bilden.

Die Oberseite 20 des Ladebodens stellt die Druckseite dar, die Unterseite des Ladebodens, insbesondere diejenige der Bohlen 22, die Zugseite, auf der ein Großteil der mechanischen Belastung liegt.

In Fig. 2 ist die Verbindung zweier Bohlen 12 gemäß einer Ausführungsform der vorliegenden Erfindung dargestellt. Dabei sind die Bohlen 12 über ein T-Profil 24 miteinander verbunden. Das T-Profil liegt so zwischen den Bohlen, dass sein Querbalken in Einbaurichtung nach unten weist und mit der Unterseite der Bohlen 12 bündig abschließt. Dazu ist in einem Bereich der Seitenflächen der Bohlen und der Unterseiten der Bohlen eine entsprechende Aussparung 26 vorgesehen, die das T-Profil zusammen mit der entsprechenden Aussparung einer zweiten Bohle aufnehmen kann. Die Bohle 12 ist beispielsweise aus Weichholz wie beispielsweise Fichte, das Profil aus Aluminium, Stahl oder GFK. Die Bohlen weisen zusätzlich eine Verstärkung 34 auf, die in Zusammenhang mit Fig. 4 bis 7 näher beschrieben wird und beispielsweise aus dem gleichen Material wie die Bohle 12 besteht. Hier ist die Verstärkung 34 schubfest mit der Bohle 12 verklebt. Eine derartige Verklebung ist auch bei anderen Materialkombinationen von Bohle-Verstärkungselement denkbar. Bei der rechts in Fig. 2 gezeigten Ausführungsform ist zwischen dem Verstärkungselement 34 und der Bohle 12 eine Einlage 35 aus Glasfaser eingelegt und mit der Bohle 12 als auch dem Verstärkungselement 34 verklebt, z.B. mit einem Zweikomponentenkleber oder -harz.

Fig. 3 zeigt eine ähnliche Verbindung zweier Bohlen 12 wie Fig. 2. Im Gegensatz zur Fig. 2 ist das verbindende Profil in diesem Fall ein Doppel-T-Profil 28. Die Ober- und Unterseite der Bohlen sind in einem an den jeweiligen Seitenrändern beginnenden Bereich mit jeweils einer Aussparung versehen, die die Querstege des T-Profils 28 so aufnehmen, dass die Querstege des Doppel-T-Profils 28 mit den jeweiligen Ober- und Unterseiten der Bohlen 12 formschlüssig abschließen und sich der Mittelsteg des Profils 28 zwischen zwei Bohlen 12 im Einbauzustand befindet.

Fig. 4 zeigt eine Bohle 12, die an ihren Seitenflächen mit einer Nut 32 bzw. einer Feder 30 versehen ist. Eine benachbarte Bohle mit ebenfalls einer Nut und einer Feder an den jeweiligen Seitenflächen kann formschlüssig an diese Bohle 12 angrenzen und somit die Verbindung zur Nachbarbohle herstellen. In Fig. 4 ist ferner eine streifenförmige Verstärkung 34 gezeigt, die in eine Aussparung 36 an der Unterseite 22 der Sohle 12 eingepasst ist. Die streifenförmige Verstärkung, die z. B. aus Hartholz oder Sperrholz ist, weist dabei ebenso wie die Aussparung, in die sie eingepasst ist, an den seitlichen Flanken 38 Schrägen auf. Diese Schrägen dienen zum Herstellen einer sicheren Verbindung, insbesondere einer sicheren Klebeverbindung, zwischen Bohle 12 und Verstärkung 34.

Die in Fig. 5 gezeigte Sohle 12 weist im wesentlichen dieselben Merkmale wie die Sohle aus Fig. 4 auf. Als streifenförmige Verstärkung 34 kommt jedoch ein Profil mit geschlossenem Querschnitt zum Einsatz. Dieses Profil kann beispielsweise aus Stahl, Aluminium oder glasfaserverstärktem Kunststoff sein und ist in der Regel durch Strangpressen gefertigt. Die Aussparung 36 in der Bohle 12 ist wiederum so geformt, dass das Profil 34, das die Verstärkung darstellt, an der Unterseite bündig mit der Bohle 12 abschließt.

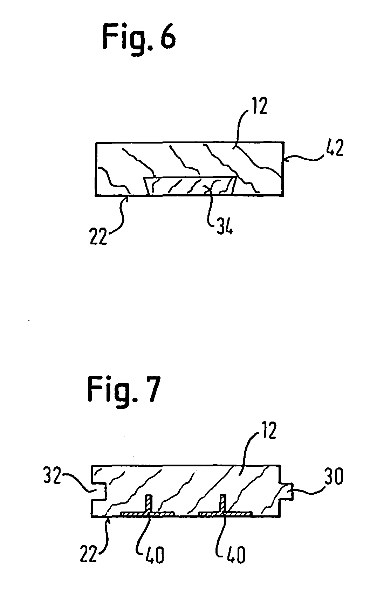

Die Bohle 12, die in Fig. 6 gezeigt ist, weist an ihren Seitenflächen 42 keine Elemente für eine formschlüssige Verbindung auf, d.h. in diesem Fall grenzen nach dem Zusammenfügen des Ladebodens zwei Bohlen ohne weitere Verbindung aneinander. Die Verstärkung 34 ist als sich nach oben verbreiternder Schwalbenschwanz ausgeführt und deckt erfindungsgemäß wesentliche Bereiche der Bohlenunterseite ab. Die Unterseite ist wiederum bündig, so dass eine ebene Fläche entsteht.

In Fig. 7 ist eine weitere Verstärkungsmöglichkeit dargestellt. Gezeigt sind zwei in Längsrichtung in die Bohle 12 eingelegte T-Profile, z. B. aus Aluminium, Stahl, GFK oder ähnlichem. Diese Profile liegen so in der Bohle 12, dass die Unterseite 22, die aus der Unterseite der Bohle 12 und den Querstegen der T-Profile 40 gebildet wird, eben ist. Die übrigen Merkmale der Bohle 12 entsprechen denjenigen aus Fig.4.

Das in den Figuren 4, 5 und 6 veranschaulichte Einbringen einer zusätzlichen Verstärkung der Bohlen auf deren Zugseite 22 bietet die Möglichkeit, die Gesamtdicke der Bohle 12 zu reduzieren, gleichzeitig jedoch die Festigkeit, die vor allem auf der Zugseite 22 erforderlich ist, sicherzustellen.

Der wesentliche Aspekt des erfindungsgemäßen Ladebodens liegt darin, dass ein einfach zu montierender Boden, der gleichzeitig verhältnismäßig kostengünstig ist, durch gezielte Verstärkung der Zugseite, also der Unterseite des Bodens, im Vergleich zu herkömmlichen Ladeböden, die, um der Zugbelastung standzuhalten, aus entsprechenden Materialien, wie Stahl, hergestellt sind, ein verringertes Gewicht aufweist. Dadurch können im Betrieb Kosten eingespart werden, die in einem verringerten Kraftstoffverbrauch resultieren.

Das verhältnismäßig teure Material, das zur Sicherstellung der Festigkeit dient, ist ferner nicht für die gesamte Bohle oder Platte zu verwenden, sondern nur in definierten Bereichen. Der so gestaltete Boden ist außerdem flexibel, da es möglich ist, in Spezialanwendungsfällen nur bestimmte Bereiche des Bodens zu verstärken. Außerdem kann durch diese Konstruktion die Bauhöhe des Bodens verringert werden. Dies führt schließlich in einem vergrößerten Ladevolumen des Fahrzeugs.

## Patentansprüche

1. Ladeboden (10) für Fahrzeuge, umfassend mehrere nebeneinanderliegende Bohlen oder Platten (12), die zusammen eine Ladefläche (20) bilden, **dadurch gekennzeichnet, dass** wenigstens einige der Bohlen oder Platten (12) auf ihrer der Ladefläche (20) gegenüberliegenden Unterseite zumindest eine Ausnehmung (36) aufweisen, die sich über wesentliche Zugbelastungsbereiche der Bohlen bzw. Platten (12) erstreckt, dass in einer solchen Ausnehmung (36) ein Verstärkungselement (34, 40) zumindest mit einem Teilabschnitt formschlüssig eingelegt ist, und dass die Verstärkungselemente (34, 40) fest mit der Bohle oder Platte (12) verbunden sind.

2. Ladeboden (10) nach Anspruch 1, **dadurch gekennzeichnet, dass** die Bohlen oder Platten (12) über Profile (24, 28) miteinander verbunden sind.

3. Ladeboden (10) nach Anspruch 2, **dadurch gekennzeichnet, dass** die Profile Doppel-T-Profile (24) sind.

4. Ladeboden (10) nach Anspruch 2, **dadurch gekennzeichnet, dass** die Profile T-Profile (24) sind.

5. Ladeboden (10) nach einem der vorhergehenden Ansprüche, **dadurch gekennzeichnet, dass** die Bohlen oder Platten (12) aus Holz sind.

6. Ladeboden (10) nach einem der vorhergehenden Ansprüche, **dadurch gekennzeichnet, dass** die Verstärkungselemente in den Ausnehmungen oder Aussparungen in den Bohlen oder Platten (12) teilweise oder vollständig eingefügte, verstärkende Streifen (34) sind.

7. Ladeboden (10) nach Anspruch 6, **dadurch gekennzeichnet, dass** die Streifen (34) an den seitlichen Flanken (38) Schrägen aufweisen, die mit korrespondierenden Schrägen an den seitlichen Flanken der Aussparungen zusammenwirken.

8. Ladeboden (10) nach einem der Ansprüche 1 bis 5, **dadurch gekennzeichnet, dass** die Verstärkungselemente in den Ausnehmungen oder Aussparungen in den Bohlen teilweise oder vollständig eingefügte Profile (40, 34) sind.

9. Ladeboden (10) nach Anspruch 8, **dadurch gekennzeichnet, dass** die Profile (40) T-Profile sind.

10. Ladeboden (10) nach Anspruch 8, **dadurch gekennzeichnet, dass** die Profile (34) streifenförmig sind.

11. Ladeboden (10) nach einem der vorhergehenden Ansprüche, **dadurch gekennzeichnet, dass** die Verstärkungselemente (34) aus Holz, insbesondere Hartholz bestehen.

12. Ladeboden (10) nach einem der vorhergehenden Ansprüche, **dadurch gekennzeichnet, dass** die Verstärkungselemente (34, 40) aus Sperrholz sind.

13. Ladeboden (10) nach einem der Ansprüche 1 bis 10, **dadurch gekennzeichnet, dass** die Verstärkungselemente (34, 40) aus glasfaserverstärktem Kunststoff sind.

14. Ladeboden (10) nach einem der Ansprüche 1 bis 10, **dadurch gekennzeichnet, dass** die Verstärkungselemente (34, 40) Alu-Strangpressprofile sind.

15. Ladeboden (10) nach einem der Ansprüche 8 bis 10, **dadurch gekennzeichnet, dass** die Verstärkungselemente Stahlprofile (34, 40) sind.

16. Ladeboden (10) nach einem der vorhergehenden Ansprüche, **dadurch gekennzeichnet, dass** die Verstärkungselmente (34, 40) und die Bohlen oder Platten (12) über jeweils eine Klebeverbindung miteinander verbunden sind.

17. Ladeboden (10) nach einem der vorhergehenden Ansprüche, **dadurch gekennzeichnet, dass** eine oder mehrere Verschleißschutzelemente (16) auf dem Ladeboden (10) auf- oder angebracht sind.

18. Ladeboden (10) nach einem der vorhergehenden Ansprüche, **dadurch gekennzeichnet, dass** die Verstärkungselemente (34, 40) in die Ausnehmungen eingepresst und/oder eingeklebt oder eingeleimt sind.

19. Ladeboden (10) nach einem der vorhergehenden Ansprüche, **dadurch gekennzeichnet, dass** zwischen einer Bohle oder Platte (12) und dem Verstärkungselement (34, 40) eine Zugkräfte aufnehmende Lage aus beispielsweise Stoff, einem Gewebe oder einem Gewirke eingelegt ist.
